# EUROPÄISCHE PATENTANMELDUNG

(11) **EP 0 579 238 A1**
(43) Veröffentlichungstag der Anmeldung: **19.01.1994**
(21) Anmeldenummer: 93111411.0
(22) Anmeldetag: 15.07.1993
(51) Int. Cl.: H04R 1/10, G02C 11/06, H04R 5/033

(54) **Kopfhörer**

(30) Priorität: 17.07.1992 DE 4223515
(71) Anmelder: Ballein, Burkhard, D-42285 Wuppertal (DE)
(72) Erfinder: Ballein, Burkhard, D-42285 Wuppertal (DE)
(74) Vertreter: Mentzel, Norbert, Dipl.-Phys.

(57) **Zusammenfassung**

Kopfhörer mit zwei Hörkapseln (10), die vorzugsweise mit je einem Schaumstoffpolster (11) umgeben in die beiden Ohrmuscheln (12) des Benutzers einsetzbar und mit einem Bügel (14) fixierbar sind, und der die beiden Hörkapseln (10) in den Ohrmuscheln des Benutzers halternde Bügel (14) von einer Brille (13) gebildet ist, wobei die beiden Hörkapseln (10) an den freien Enden (25) der Brillenbügel (14) gehaltert sind, und die freien Enden der Brillenbügel im wesentlichen geradlinig zur Mitte der Ohrmuscheln (10) verlaufen.

## Beschreibung

Die Erfindung betrifft einen Kopfhörer mit zwei Hörkapsein, die vorzugsweise mit je einem Schaumstoffpolster umgeben in die beiden Ohrmuscheln des Benutzers einsetzbar und mit einem Bügel fixierbar sind.

Diese bekannten Kopfhörer werden in der Regel für tragbare Radios und/oder Wiedergabegeräte benutzt. Die beiden in die Ohrmuscheln des Benutzers einsetzbaren Hörkapseln werden dabei mit einem Bügel benutzt, der auf der Oberseite des Kopfes aufliegt. Durch diesen Bügel wird jedoch das Aussehen des Benutzers beeinträchtigt und das Aufsetzen von Hüten, Mützen od.dgl. behindert.

Der Erfindung liegt die Aufgabe zugrunde, einen Kopfhörer der eingangs erläuterten Art weiter zu verbessern und insbesondere den Bügel einzusparen, wobei trotzdem die Hörkapseln zuverlässig in den Ohrmuscheln des Benutzers gehaltert werden.

Diese Aufgabe ist erfindungsgemäß dadurch gelöst, daß der die beiden Hörkapseln in den Ohrmuscheln des Benutzers halternde Bügel von einer Brille gebildet ist, wobei die beiden Hörkapseln an den freien Enden der Brillenbügel gehaltert sind, und die freien Enden der Brillenbügel im wesentlichen geradlinig zur Mitte der Ohrmuscheln verlaufen. Mit den Bügeln der Brille werden somit in einfacher Weise die beiden Hörkapseln des Kopfhörers zuverlässig in den Ohrmuscheln des Benutzers gehalten. Die Brille kann dabei als Sonnenbrille oder als Sehbrille ausgebildet sein. Die beiden Hörkapseln sind dabei an den freien Enden der Brillenbügel gehaltert und halten somit nach dem Einstecken der Hörkapseln in den Ohrmuscheln des Benutzers gleichzeitig auch die Brille. Die freien Enden der Brillenbügel verlaufen dabei im wesentlichen geradlinig zur Mitte der Ohrmuscheln, so daß die Brillenbügel auch nicht mehr auf den Ohrmuscheln aufliegen müssen.

Die beiden Brillenbügel können Aufnahmen für ein Einklippsen der Hörkapseln aufweisen. Durch Einklippsen sind somit in einfacher Weise die Hörkapseln an dem Brillenbügel befestigbar.

Die Hörkapsel kann aus einem Grundteil mit Abschlußdeckel und eingesetztem elektroakustischem Wandler bestehen. Der elektroakustische Wandler ist somit in einfacher Weise in einem Grundteil mit einklippsbarem Abschlußdeckel eingesetzt und somit wohlfeil herstellbar und montierbar.

Der Grundteil der Hörkapsel kann mit einem kugelförmigen Ansatz in eine entsprechend geformte Aufnahme des Brillenbügels verstellbar eingeklippst sein. Dadurch ist in einfacher und zuverlässiger Weise die Hörkapsel verstellbar am Brillenbügel gehaltert.

Der mit einem Scharnier an der Gläserfassung der Brille angelenkte Brillenbügel kann mit einer ein Verstellen der Bügelneigung ermöglichenden Schraube an seinem Scharnierteil befestigt sein. Dadurch ist in einfacher Weise eine Anpassung an den Benutzer durch Verstellen der Neigung des Brillenbügels gegenüber der Gläserfassung möglich.

Der Brillenbügel kann zweiteilig mit überlappenden Bereichen zu seiner Längsverstellung ausgebildet sein. Dadurch ist ebenfalls eine Anpassung an den Benutzer möglich, da die Länge des Brillenbügels in einfacher Weise dem Benutzer anpaßbar ist.

Der die Hörkapsel tragende Teil des Brillenbügels kann in einer Längsnut im zweiten Bügelteil verschiebbar gehaltert sein. Durch Verschieben des einen Brillenteiles in der Längsnut des zweiten Bügelteiles kann somit in einfacher Weise die Länge des Brillenbügels dem Benutzer angepaßt werden.

In den Zeichnungen ist die Erfindung in einem Ausführungsbeispiel dargestellt, und zwar zeigen:

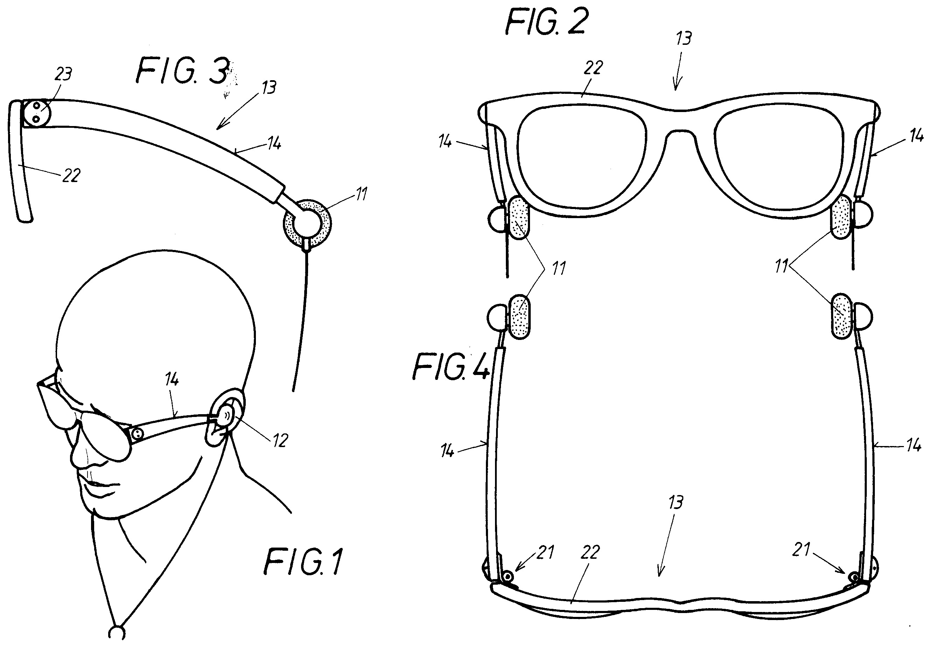

- Fig. 1: einen erfindungsgemäßen Kopfhörer in schaubildlicher Darstellung in der Wirkstellung mit dem Kopf eines Benutzers,
- Fig. 2: den erfindungsgemäßen Kopfhörer in Vorderansicht,
- Fig. 3: den erfindungsgemäßen Kopfhörer in Seitenansicht,
- Fig. 4: den erfindungsgemäßen Kopfhörer in Draufsicht, und
- Fig. 5: einen Teil des erfindungsgemäßen Kopfhörers in einer Explosions-Darstellung.

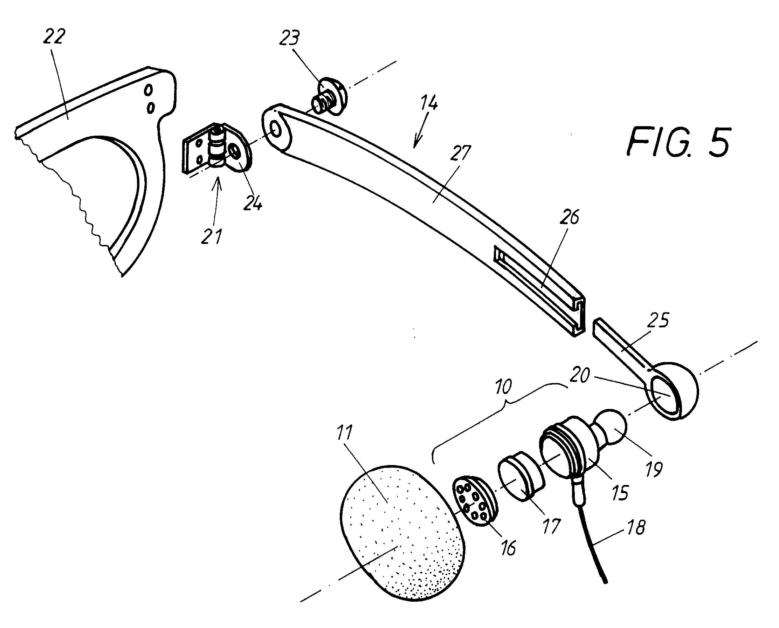

Der erfindungsgemäße Kopfhörer weist zwei Hörkapseln 10 auf, die mit je einem Schaumstoffpolster 11 umgeben in die beiden Ohrmuscheln 12 des Benutzers einsetzbar und mit einem von einer Brille 13 gebildeten Bügel fixierbar sind. Wie insbesondere aus der Fig. 5 ersichtlich, sind die beiden Hörkapseln 10 an den freiem Enden der Brillenbügel 14 gehaltert. Die freien Enden der Brillenbügel 14 verlaufen dabei im wesentlichen geradlinig zur Mitte der Ohrmuscheln 12. Die Brille kann dabei als Sonnenbrille oder als Sehbrille ausgebildet sein und hält in einfacher und zuverlässiger Weise die Hörkapseln 10 in den Ohrmuscheln 12 des Benutzers.

Wie weiterhin der Fig. 5 zu entnehmen ist, besteht die Hörkapsel 10 aus einem Grundteil 15 mit einklippsbarem Abschlußdeckel 16, in dem der elektroakustische Wandler 17 eingesetzt ist. Die Anschlußkabel 18 sind dabei an dem Grundteil 15 gehaltert, der in nicht dargestellter Weise im Innenraum Kontakte für den elektroakustischen Wandler aufweist.

Der Grundteil 15 der Hörkapsel 10 ist mit einem kugelförmigen Ansatz 19 in eine entsprechend geformte Aufnahme 20 des Brillenbügels 14 verstellbar eingeklippst. Dadurch ist eine leichte Montage möglich, und die Hörkapsel 10 kann in einfacher Weise zur Anpassung an die Ohrmuschel 12 des Benutzers gegenüber dem Brillenbügel 14 begrenzt verstellt werden.

Der mit einem Scharnier 21 an der Gläserfassung 22 der Brille angelenkte Brillenbügel 14 kann mit einer ein Verstellen der Bügelneigung ermöglichenden Schraube 23 an seinem Scharnierteil befestigt werden. Dadurch ist in einfacher Weise eine Anpassung der Brille an den Benutzer möglich, da durch Lösen der Schraube 23 der Brillenbügel 14 gegenüber der Gläserfassung 22 in seiner Neigung verstellt werden kann.

Zur weiteren Anpassung der Brille an den Benutzer kann auch der Brillenbügel 14 zweiteilig mit überlappenden Bereichen zu seiner Längenverstellung ausgebildet sein. Hierzu ist, wie insbesondere aus der Fig. 5 ersichtlich, der die Hörkapsel 10 tragende Teil 25 des Brillenbügels 14 in einer Längsnut 26 im zweiten Bügelteil 27 verschiebbar gehaltert.

Wie bereits erwähnt, ist die dargestellte Ausführung lediglich eine beispielsweise Verwirklichung der Erfindung und diese nicht darauf beschränkt. Vielmehr sind noch mancherlei andere Ausführungen und Abänderungen möglich. So könnte das Anschlußkabel 18 auch nur zu einer einzigen Hörkapsel führen und ein Kabel von der mit dem Anschlußkabel versehenen Hörkapsel zu der zweiten Hörkapsel führen, wobei dieses Kabel entlang der beiden Brillenbügel 14 und der Gläserfassung 22 geführt ist. Ferner könnte mit der Schraube 23 die Neigung des Brillenbügels 14 auch derart verstellt werden, daß der Brillenbügel 14 auf dem Ohr des Benutzers aufliegt. Dies ist insbesondere dann erforderlich, wenn die Brille 13 ohne Hörkapseln 10 benutzt werden soll. Dabei kann die die Neigung verstellende Schraube 23 auch in einem Abstand vom Scharnier 21 angeordnet werden.

### Bezugszeichenliste:

- 10: Hörkapsel
- 11: Schaumstoffpolster
- 12: Ohrmuschel
- 13: Brille
- 14: Brillenbügel
- 15: Grundteil
- 16: Abschlußdeckel
- 17: elektroakustischer Wandler
- 18: Anschlußkabel
- 19: kugelförmiger Ansatz
- 20: Aufnahme
- 21: Scharnier
- 22: Gläserfassung
- 23: Schraube
- 24: Scharnierteil
- 25: Bügelteil
- 26: Längsnut
- 27: zweiter Bügelteil

## Patentansprüche

1. Kopfhörer mit zwei Ohrkapseln, die vorzugsweise mit je einem Schaumstoffpolster umgeben in die beiden Ohrmuscheln des Benutzers einsetzbar und mit einem Bügel fixierbar sind,
**dadurch gekennzeichnet,**
daß der die beiden Hörkapseln (10) in den Ohrmuscheln (12) des Benutzers halternde Bügel von einer Brille gebildet ist, wobei die beiden Hörkapseln (10) an den freien Enden der Brillenbügel (14) gehaltert sind, und die freien Enden der Brillenbügel (14) im wesentlichen geradlinig zur Mitte der Ohrmuscheln (12) verlaufen.

2. Kopfhörer nach Anspruch 1, dadurch gekennzeichnet, daß die beiden Brillenbügel (14) Aufnahmen (20) für ein Einklippsen der Hörkapseln (10) aufweisen.

3. Kopfhörer nach Anspruch 1 oder 2, dadurch gekennzeichnet, daß die Hörkapsel (10) aus einem Grundteil (15) mit Abschlußdeckel (16) und eingesetztem elektroakustischem Wandler (17) besteht.

4. Kopfhörer nach einem der Ansprüche 1 bis 3, dadurch gekennzeichnet, daß der Grundteil (15) der Hörkapsel (10) mit einem kugelförmigen Ansatz (19) in eine entsprechend geformte Aufnahme (20) des Brillenbügels (14) verstellbar eingeklippst ist.

5. Kopfhörer nach einem der Ansprüche 1 bis 4, dadurch gekennzeichnet, daß der mit einem Scharnier (21) an der Gläserfassung (22) der Brille angelenkte Brillenbügel (14) mit einer ein Verstellen der Bügelneigung ermöglichenden Schraube (23) an seinem Scharnierteil (24) befestigt ist.

6. Kopfhörer nach einem der Ansprüche 1 bis 5, dadurch gekennzeichnet, daß der Brillenbügel (14) zweiteilig mit überlappenden Bereichen zu seiner Längenverstellung ausgebildet ist.

7. Kopfhörer nach Anspruch 6, dadurch gekennzeichnet, daß der die Hörkapsel (10) tragende Teil (25) des Brillenbügels (14) in einer Längsnut (26) im zweiten Bügelteil (27) verschiebbar gehaltert ist.
